# EUROPEAN PATENT SPECIFICATION

(11) **EP 2 266 748 B1**
(45) Date of publication and mention of the grant of the patent: **18.04.2012**
(21) Application number: 09425247.5
(22) Date of filing: 26.06.2009
(51) Int. Cl.: B23Q 7/04, B23Q 17/20

(54) **Method and apparatus for handling sections to be worked**
Verfahren und Vorrichtung zur Handhabung von zu bearbeitenden Abschnitten
Procédé et appareil de manipulation de sections à traiter

(43) Date of publication of application: 29.12.2010
(73) Proprietor: ME.C.AL. S.p.A., 27030 Frascarolo (PV) (IT)
(72) Inventor: Cavezzale, Ennio, 27030 Frascarolo PV (IT); Siviero, Roberto, 27029 Vigevano (PV) (IT)
(74) Representative: Bonvicini, Davide

(56) References cited:
- WO-A2-89/05709
- DE-A1-102004 037 879
- FR-A1- 2 689 807

## Description

The present invention relates to an apparatus and a method for handling section to be worked.

Particularly, the apparatus and method of the present invention may be suitable for use in storehouses or industrial section-working plants.

Sections are commonly used for load-bearing structures and elements in carpentry and/or for metal constructions in general. Typically, such sections are required to undergo predetermined machining processes such as milling, drilling, cutting or welding.

Prior art section working plants include a section feeding unit, an apparatus for handling sections and a section working unit. The section feeding unit has a load platform for feeding the section workpieces to the apparatus for handling sections and retainer means at the sides of the load platform. These retainer means define limit stop positions for the sections and guide the movement of the sections to the apparatus for handling section workpieces, which in turn transfers the sections to the section working unit.

Apparatus for handling sections have support means for supporting each section, a slide guide and gripper means movably mounted to the slide guide to grasp each section and carry it to the section working unit.

It shall be noted that section workpieces have various shapes according to their final use. Therefore, the apparatus for handling sections may also receive sections of different lengths from the load platform. In order to ensure that the gripper means are always in their proper position relative to the section to be worked, the section handling apparatus have detection means for measuring the section length. Such apparatus is disclosed e.g. in FR 2 689 807.

Section length is measured in the art by photoelectric barriers mounted to support means and characterized by high resolutions and low error rates. Although photoelectric barriers ensure high accuracy, their high cost greatly increases the overall cost of the apparatus for handling sections and hence of the plant.

A less expensive section length measurement solution consists in using a plurality of photoelectric sensors mounted in spaced relation to the support means for measuring section length with a predetermined tolerance.

Although the use of photoelectric sensors is less expensive than the use of photoelectric barriers, this solution is impaired by section length measurement inaccuracy. Indeed, the spacing between the photoelectric sensors generates an error margin in section length measurement. Thus, the gripper means have an approximate position relative to the section and are required to be further moved towards the section, thereby actually increasing working times and causing plant throughput losses.

The object of the present invention is to provide an apparatus for handling sections that has such structural and functional features as to fulfill the above needs, while obviating the drawbacks of prior art.

This object is fulfilled by a method for handling sections as defined in claim 1.

In another aspect, the invention relates to an apparatus for handling sections as defined in claim 8.

Further features and advantages of the apparatus and method of the present invention will be apparent from the following description of one preferred embodiment thereof, which is given by way of illustration and without limitation with reference to the accompanying figures, in which:
- Figure 1 is a schematic view of an apparatus for handling sections of the present invention,
- Figure 2 is a view of a section working plant including the apparatus for handling sections of Figure 1, in which the section is placed in the working unit,
- Figure 3 is a view of the plant of Figure 2, in which the section is placed in the section handling apparatus of Figure 1,
- Figures 4 to 8 are side views of the apparatus of figure 1, showing the movement of the gripper means and the detection means during section detection and gripping,
- Figure 9 is a schematic view of an embodiment of the gripper means of the apparatus of Figure 1.

Referring to the accompanying figures, numeral 1 generally designates a section working plant for working sections P, which comprises a section feeding unit 200, an apparatus for handling sections 100 of the present invention and a section working unit 300.

The sections P are conventional sections for use in section working and may be formed of a variety of materials, such as metal, plastic or possibly wood or aluminum.

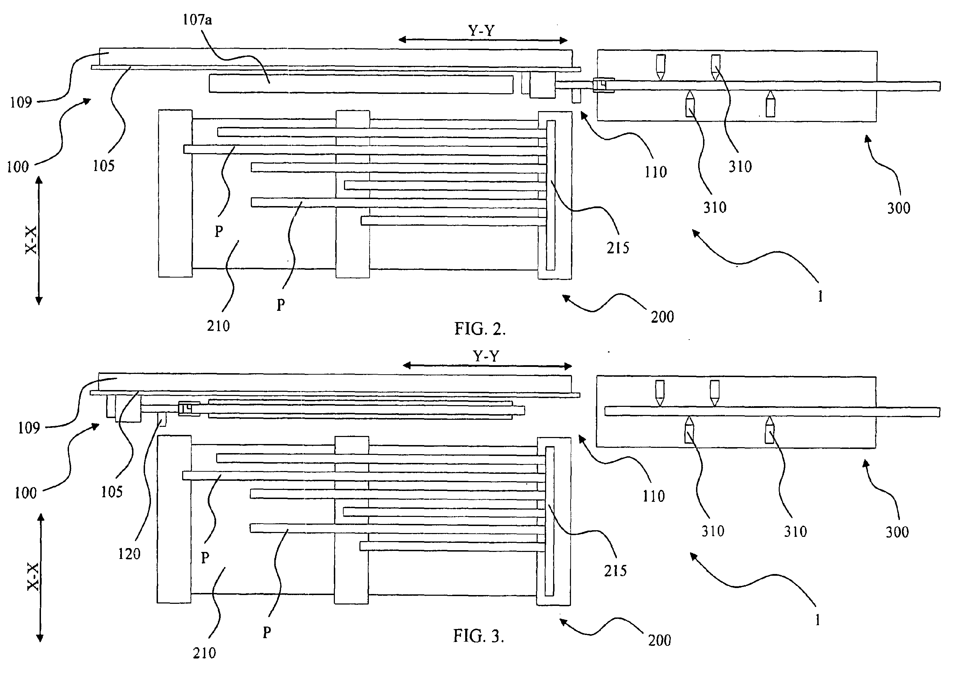

As shown in Figures 2 and 3, the section feeding unit 200 has a load platform 210 for carrying each section P in a feed direction X-X to the apparatus for handling sections 100, which in turn will carry each section P to the section working unit 300 in the direction Y-Y.

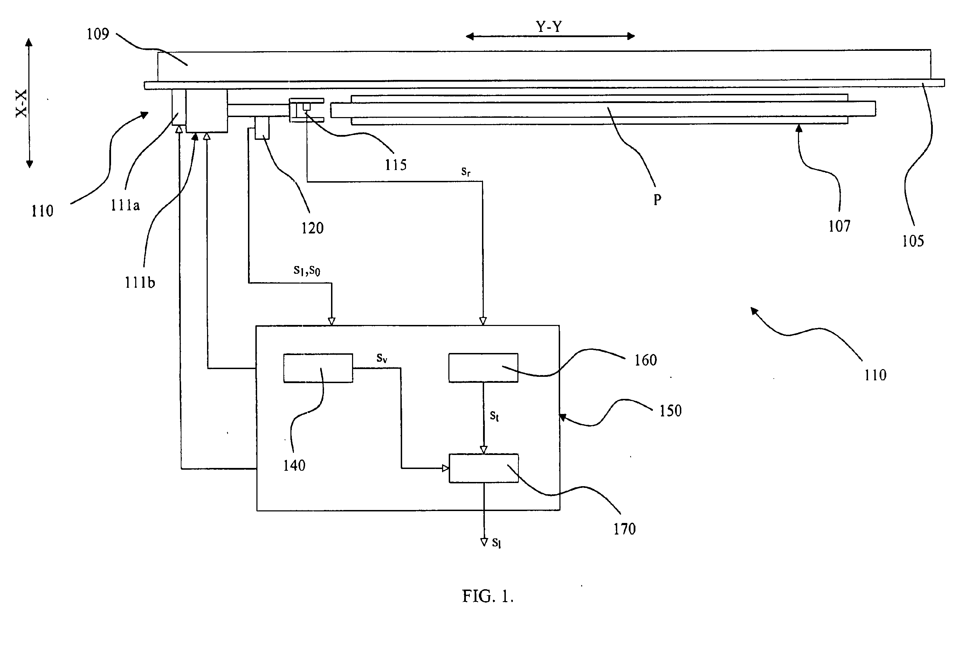

In the examples as shown in Figures 1 to 3, the feed direction X-X is perpendicular to the longitudinal extension of the sections P.

The load platform 210 has retainer means 215 which are adapted to set the limit stop position for the sections P and guide the sections P to the apparatus 100.

Section working processes, such as drilling, milling, cutting or welding, are carried out by the section working unit 300 which has section working means 310 adapted to carry out working processes on the sections P. The section working means 310 may include corresponding milling, drilling, cutting or welding devices, according to the section working process to be carried out.

In order to receive each section P from the apparatus 100, the section working unit 300 is adjacent to the apparatus 100, at one side of such apparatus 100.

As used herein, the term first side f₁ is intended to designate the side of the apparatus 100 towards which each section P is moved out of the apparatus 100 to the section working unit 300. The term second side f₂ is intended to designate the side of the apparatus 100 opposite to the first side f₁.

The apparatus 100 comprises support means 107 for supporting a section P. In the example of the figures, the support means 107 include a platform 107a extending over a horizontal plane.

The apparatus 100 also includes a slide guide 105 and a support frame 109. In the example of the figures, the slide guide 105 is fixed to the frame 109. Otherwise, the slide guide 105 may be fixed to the support means 107 or to other elements for fixing the guide 105.

The slide guide 105 extends in a sliding direction, indicated by Y-Y and parallel to the longitudinal extension of the sections P.

In the figures, the two feed X-X and slide Y-Y directions lie on an ideal plane X-Y horizontal to the plane of installation of the platform 107a or, for instance, horizontal to the floor plane.

The apparatus 100 has gripper means 110 for grasping the section P, which are movably mounted to the slide guide 105 and mutually movable relative to the support means 107 for the section P.

Particularly, the gripper means 110 include a clamping vice 112 having two opposite jaws 112a, 112b that are designed to be moved towards each other in a clamping direction, in the example of Figure 1 parallel to the feed direction X-X.

In order to cause mutual motion of the jaws 112a, 112b in the clamping direction, the gripper means 110 include actuator means 113 operating on the jaws 112a, 112b.

The apparatus 100 also comprises first drive means 111 a for moving the gripper means 110 along the slide guide 105 in the sliding direction Y-Y and second drive means 111b for moving the gripper means 110 from and to the support means 107, in this example in a vertical direction Z-Z substantially perpendicular to the plane X-Y.

In one embodiment, the first drive means 111a and the second drive means 111b are mounted to the gripper means 110.

Particularly, the first drive means 111a include first motion imparting means 110a which are mounted for sliding along the slide guide 105 and the second drive means 111b include second motion imparting means 110b which are mounted for sliding along a slide guide 116b, characterized in the gripper means 110 and extending in the vertical direction Z-Z.

According to one embodiment, the first and second drive means 111a, 111b may include a gearwheel or a linear magnetic rotor which are coupled to the gears or the magnetic track of the slide guide 105 and the slide guide 116b respectively.

The clamping vice 112 is designed to grasp the sections P at one of the two ends p₁,p₂ thereof, e.g. the terminal end p₂.

As used herein, the tail end p₁ is assumed as the end adjacent to the side f₁ of the apparatus 100 and opposite to the terminal end p₂ of the section P.

The grasp of the section P by the clamping vice 112 at the terminal end p₂ prevents the gripper means 110 from being a hindrance within the section working unit 300, particularly to the section working tools therein.

As described in greater detail below, the gripper means 110 are movable towards the section P in the sliding direction Y-Y for allowing the jaws 112a, 112b of the clamping vice 112 to reach the terminal end p₂ and grasp the section P.

According to one embodiment, the clamping vice 112 includes retainer means 115 which are adapted to define an end p₁,p₂ of the section P, e.g. the terminal end section p₂. Particularly, the retainer means 115 are placed between the jaws 112a, 112b to stop the motion of the gripper means 110 at such terminal end p₂ in the sliding direction Y-Y or in the vertical direction Z-Z.

In accordance with one embodiment, the retainer means 115 include a tracer, which is adapted to abut against one end p₁,p₂ of the section P, e.g. the terminal end p₂, thereby generating an enable signal sᵣ to stop the motion of the gripper means 110. Once the retainer means 115 have located the terminal end p₂ of the section P, the enable signal sᵣ so generated may be used to drive the actuator means 113 and thus moving the jaws 112a, 112b towards each other to grasp and hold the section P at the terminal end p₂. Alternatively, the retainer means 115 may include photoelectric sensors adapted to transmit an analogous enable signal sᵣ enabling to locate the terminal end p₂ of the section P.

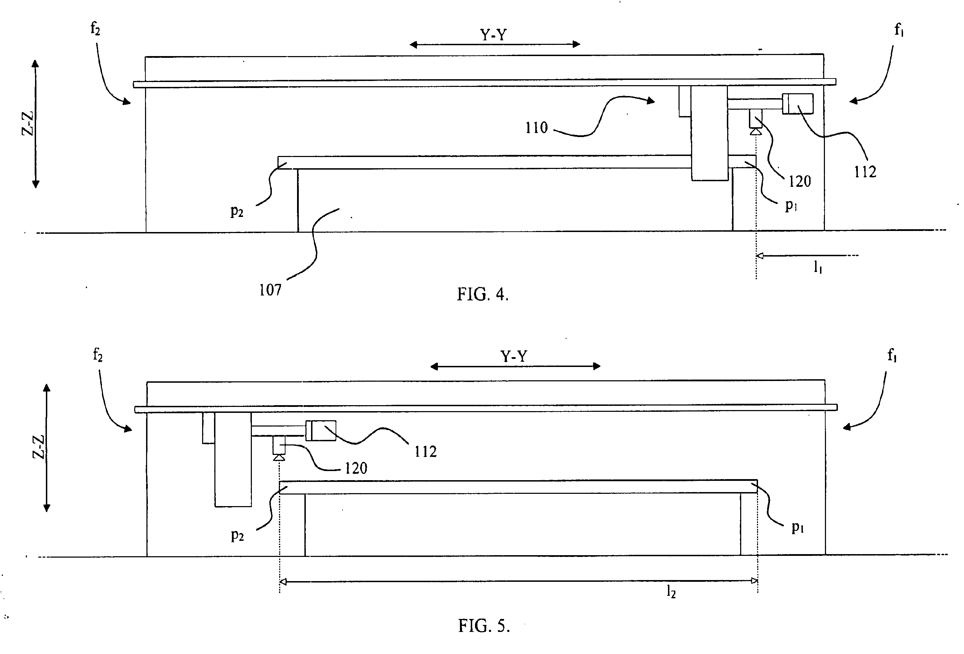

As shown in Figures 4 to 9, the slide guide 105 is situated at a higher position than the platform 107a of the support means 107.

As anticipated in the introduction of the present disclosure, the sections P may have a variety of shapes. Therefore, the apparatus 100 may receive sections P of different lengths from the load platform 210.

In order to determine the position in which the gripper means 110 are to be placed to grasp the section P at its terminal end p₂, the apparatus 100 has detection means 120 adapted to generate a first detection signal sᵣ indicative of the presence of the section P and a second detection signal s₀ indicative of the absence of the section P.

The detection means 120 are fixed to the gripper means 110 and are movable solidly with the gripper means 110 to slide along the slide guide 105 relative to the support means 107.

It shall be noted that, appropriate processing of the detection signals s₁,s₀, during the sliding movement of the detection means 120, it is possible to determine the absence and presence of the section P and, consequently, to determine with accuracy the position of the ends p₁,p₂ of each section P supported, in sequence, by the support means 107.

An explanation will be now given of how the apparatus for handling sections 100 of the present invention and the processing of the detection signals s₁,s₀ generated by the detection means 120, allow to determine the ends p₁,p₂ of the section P to be located.

According to one embodiment, the detection means 120 include a system for optically measuring the distance of an object to be detected, having a light source emitting a light signal, a processor for processing the emitted light signal and a receiver for receiving the light signal reflected by the object to be detected and processing the reflected light signals by generating corresponding voltage signals that represent the detection signals s₁,s₀.

For instance, the detection means 120 may include a photoelectric sensor, a photocell, a laser, a LED.

The detection means 120 may be calibrated to set a first voltage range within which the measured voltage defines the first detection signal s₁ indicative of the presence of the section P, and to set a second voltage range within which the measured voltage defines the second detection signal s₀ indicative of the absence of the section P.

In order to control the motion of the gripper means 110 and hence the detection means 120 fixed thereto, the apparatus 100 comprises control means 150 in signal communication with the first drive means 111a.

The control means 150 are adapted to provide a control signal to the first drive means 111a to control the motion of the gripper means 110.

The control signal may include an activation control signal s_{ON} and/or an deactivation control signal s_{OFF}.

According to one embodiment, the control means 150 include a PLC interface. It should be noted that the control means 150 may comprise a computer or any other device adapted to provide the control signal to the first drive means 111a.

The control means 150 are also in signal communication with the detection means 120.

In order to stop the motion of the gripper means 110 and, consequently, of the detection means 120, the control means 150 are adapted to provide a deactivation control signal s_{OFF} to the first drive means 111a. Thus, the first drive means 111a are turned off and stop the motion of the gripper means 110 along the slide guide 105.

The deactivation signal s_{OFF} is transmitted to the first drive means 111a upon reception of the second signal s₀ indicative of the absence of the section P. In practice, when the detection means 120 determine that the section P is not present, the gripper means 110 are stopped at the terminal end p₂ for the section P to be later grasped by the clamping vice 112.

According to one embodiment, the control means 150 are in signal communication with the retainer means 115, which generate the enable signal sᵣ indicative that the terminal end p₂ of the section P has been located. According to one embodiment, the control means 150 are in signal communication with the second drive means 111b to provide a control signal to second drive means 111b and control the motion of the gripper means 110.

Particularly, the control means 150 are adapted to provide an deactivation control signal s_{OFF} to the second drive means 111b to stop the motion of the gripper means 110 upon reception of the enable signal sᵣ.

The control means 150 of the apparatus 100 include control means 140 in signal communication with the first drive means 111a and/or the second drive means 111 b.

The control means 140 are adapted to generate a controlling signal sᵥ to control the speed of the first drive means 111a. Particularly, the speed controlling signal sᵥ so generated is adapted to set the speed v of the first drive means 111 a to a predetermined constant speed value, to allow the gripper means 110 to slide at constant speed along the slide guide 105. Such predetermined speed value may be set, for instance, through the PLC interface.

According to one embodiment, the control means 150 include a counter 160 in signal communication with the detection means 120 and adapted to receive the detection signals s₁,s₀. The counter 160 is adapted to generate a time signal sₜ indicative of the time interval elapsed from the reception of the first signal s₁ to the reception of the second signal s₀. Particularly, the counter 160 is triggered upon reception of the first signal s₁ and stopped upon reception of the second signal so.

According to one embodiment, the control means 150 include measuring means 170 in signal communication with the control means 140 and the counter 160.

Advantageously, the measuring means 170 are adapted to process the speed controlling signal sᵥ and the time signal sₜ to generate a measurement signal s₁ indicative of the length 1 of the section P. Thus, the apparatus 100 of the present invention can measure the length of each section P. The section length value may be thus used for logistic purposes and/or when working the sections P.

In a further embodiment, the control means 150 are in signal communication with the measuring means 170 to stop the motion of the gripper means 110. Particularly, the control means 150 are adapted to provide the deactivation control signal s_{OFF} to the first drive means 111a upon reception of the time signal sₜ to stop the gripper means 110 at the end of the time interval elapsed between the determination of the two ends p₁,p₂ of each section P.

The method for handling sections of the present invention, implemented by the above described section handling apparatus 100 will be now described.

The method first includes the steps of:
a) activating the detection means (120),
b) moving the gripper means 110 along the slide guide 105.

In one embodiment, the step b) of moving the gripper means includes the steps of:
b₁) moving the gripper means 110 by first drive means 111a movably associated with the slide guide 105,
b₂) providing a control signal to the first drive means 111a to control the motion of the gripper means 110 along the slide guide 105.

In one embodiment, to move the gripper means 110, the step b₁) includes the step of moving the gripper means 110 at constant speed v along the slide guide 105.

In one embodiment, such motion of the gripper means 110 includes the step of moving the gripper means 110 in the direction Y-Y from the first side f₁ to the second side f₂ of the apparatus 100.

After the step b) of moving the gripper means 110, the handling method includes the step of:
c) checking for the presence of the section P by the detection means 120.

In one embodiment, the step c) of checking for the presence of the section P includes the steps of:
c₁) locating the head end p₁ of the section P,
c₂) locating the terminal end p₂ of the section P.

In one embodiment, to locate the head end p₁ of the section P, the step c₁) includes the steps of:
c₁₋₁) determining the presence of the section P,
c₁-₂) generating a first detection signal s₁ indicative of the presence of the section P by the detection means 120.

It shall be noted that, if no section P is detected in step c), such step c) comprises the step of repeating the steps b) and c).

In one embodiment, to locate the terminal end p₂ of the section P, the step c₂) includes the steps of:
c₂₋₁) determining the absence of the section P,
c₂₋₂) generating a second detection signal s₀ indicative of the absence of the section P by the detection means 120.

In one embodiment, after the step c₂) of locating the terminal end p₂ of the section P, the method includes the steps of:
c₃) calculating a time interval sₜ indicative of the time interval elapsed between the step c₁) and the step c₂) by a counter 160 associated with the detection means 120,
c₄) processing the constant speed value v and the time interval value sₜ by measuring means 170 in signal communication with the counter 160,
c₅) calculating a measurement s₁ indicative of the length of the section (P).

Figure 4 is a side view of the apparatus 100 in which the gripper means 110 are situated at the head end p₁ of the section P at the time of detection of the presence of the section P itself.

After the step c) of checking for the presence of the section P, the handling method includes the step of:
d) stopping the motion of the gripper means 110 when the terminal end p₂ of the section P has been located.

In one embodiment, the motion stopping step d) includes the steps of:
d₁) providing a deactivation control signal s_{OFF} to the first drive means 111a to slow down the gripper means 110 in the sliding direction Y-Y at the second terminal end p₂ of the section P,
d₂) providing an activation control signal s_{ON} to the second drive means 111b to move the gripper means 110 to the support means 107 that support the section P in a vertical direction Z-Z substantially perpendicular to the sliding direction Y-Y,
d₃) providing a deactivation control signal s_{OFF} to the second drive means 111b to stop the motion of the gripper means 110 in the vertical direction Z-Z at the terminal end p₂ of the section P,
d₁) providing an activation control signal s_{ON} to the first drive means 111a to move the gripper means 110 to the section P in the sliding direction Y-Y,
d₅) providing an additional deactivation control signal s_{OFF} to the first drive means 111a upon reception of a retaining signal sᵣ indicative of the determination of the terminal end p₂ of the section P, to stop the motion of the gripper means 110 along the sliding direction Y-Y.

With particular reference to the step d₁) of providing a deactivation control signal s_{OFF} to the first drive means 111a, in one embodiment, the step d₁) includes the steps of:
d₁₋₁) providing the deactivation signal s_{OFF} to the first drive means 111a upon reception of the second signal s₀ indicative of the absence of the section P.

Figure 5 is a side view of the apparatus 100 corresponding to the step d₁₋₁) of the method of the present invention, in which the gripper means 110 are situated at the terminal end p₂ of the section P at the time of determination of the absence of the section P itself.

In one embodiment, the step d₁) of providing a deactivation control signal s_{OFF} to the first drive means 111a may include the steps of:
d₁₋₂) decreasing the speed of the first drive means 111a according to a predetermined deceleration rule,
d₁₋₃) decreasing the speed of the gripper means 110 along a section l₃ of predetermined length in the direction Y-Y towards the second side f₂ of the apparatus 100.

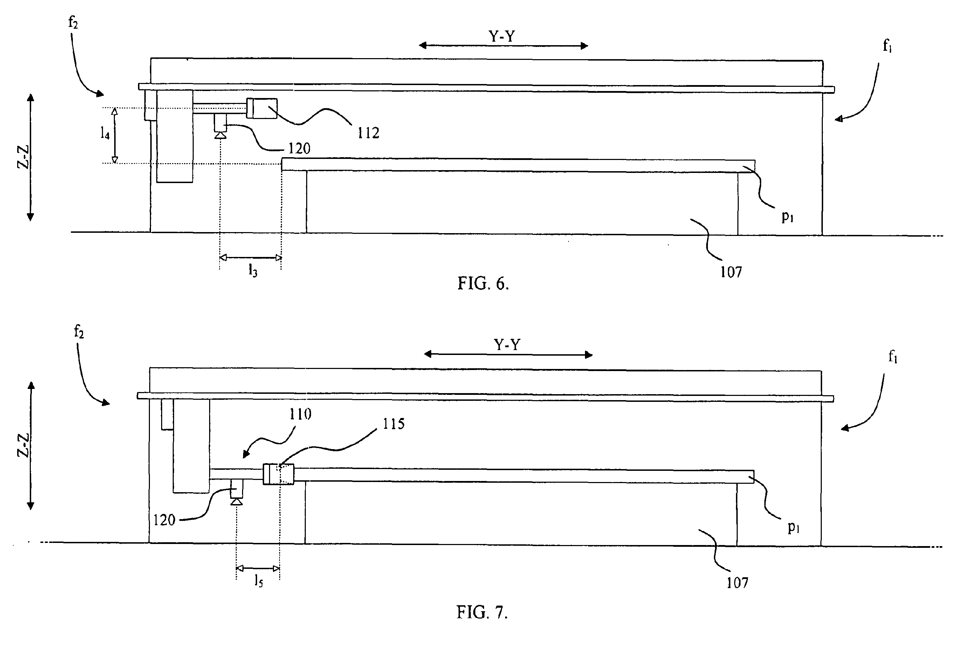

Figure 6 is a side view of the apparatus 100 corresponding to the steps d₁₋₂) and d₁₋₃) of the method of the present invention, in which the speed of the gripper means 110 is decreased along the section l₃ of predetermined length.

With particular reference to the step d₂) of providing an activation control signal s_{ON} to the second drive means 111b, in one embodiment, the step d₂) includes the step of:
d₂₋₁) moving the gripper means 110 to the support means 107 that support the section P.

In one embodiment, the step d₂₋₁) of moving the gripper means 10 to the support means includes the step of:
d₂₋₁₋₁) moving the gripper means 110 along a section l₄ of predetermined length in the direction Z-Z.

With particular reference to the step d₃) of providing a deactivation control signal s_{OFF} to the second drive means 111b, in one embodiment, the step d₃) includes the additional step of d₃₋₁) stopping the motion of the gripper means 110 in the vertical direction Z-Z at the terminal end p₂ of the section P and upon reception of the deactivation control signal s_{OFF}.

Figure 7 is a side view of the apparatus 100 corresponding to the step d₃₋₁) of the method of the present invention, in which the gripper means 110 are stopped at the terminal end p₂ of the section P.

With particular reference to the step d₄) of providing an activation control signal s_{ON} to the first drive means 111a, in one embodiment, the step d₄) includes the step of:
d₄₋₁) moving and drawing up the gripper means 110 towards the section P along a section l₅ of predetermined length in the direction Y-Y, to the first side f₁ of the apparatus 100.

With particular reference to the step d₅) of providing a deactivation control signal s_{OFF} to the first drive means 111a upon reception of a retaining signal sᵣ, in one embodiment, the step d₅) includes the step of:
d₅₋₁) generating the retaining signal sᵣ by retainer means 115 mounted to the gripper means 110.

After the step d) of stopping the motion of the gripper means 110, the handling method includes the step of:
e) grasping the section P at its terminal end p₂ by the gripper means 110.

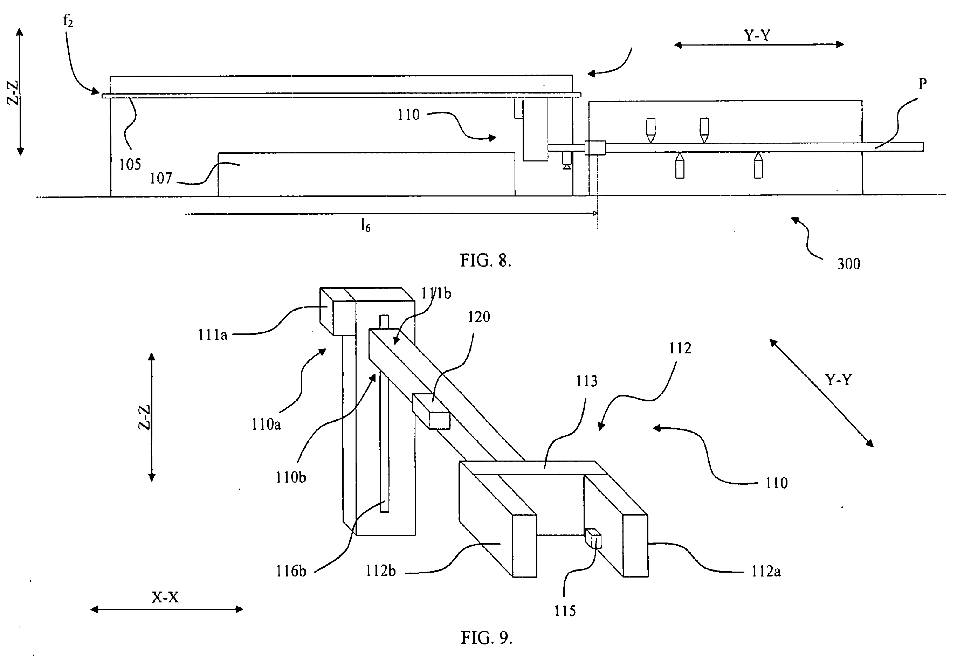

Figure 8 is a side view of the apparatus 100 corresponding to the step e) of the method of the present invention, in which the gripper means 110 grasp the section P at its terminal end p₂.

After the step e) of grasping the section P at its terminal end p₂, the handling method includes the step of:
f) moving the gripper means 110 along the slide guide 105.

In one embodiment, the step f) of moving the gripper means 110 includes the steps of:
f₁) providing an activation control signal s_{ON} to the first drive means 111a,
f₂) moving the gripper means 110 along the slide guide 105 to the first side f₁ of the apparatus 105,
f₂) releasing the section P into a working unit 300 for sections P.

Figure 9 is a side view of the apparatus 100 and the section working unit 300 corresponding to the step f₂) of the method of the present invention, in which the gripper means 110 are situated at the working unit 300 for sections P.

Referring now to Figures 4 to 9, a preferred embodiment of the method for handling section of the invention will be now described.

From a state in which a section P is received into the apparatus 100, particularly on the platform 107a of the support means 107 from the section feeding unit 200, the gripper means 110 are situated at the first side f₁ of the apparatus 100.

The method includes an initial step, in which the control means 150 operate the detection means 120 and the first drive means 111a, to move the gripper means 110 in the direction Y-Y from the first side f₁ to the second side f₂ of the apparatus 100. It shall be noted that the control means 140 generate a controlling signal sᵥ to control the speed of the first drive means 111a. Particularly, the gripper means 110 are moved from the first side f₁ to the second side f₂ at a constant speed.

As the gripper means 110 are moved from the first side f₁ to the second side f₂ of the apparatus 100, the detection means 120 emit a light signal to determine the presence or absence of the section P on the support platform 107a.

In a first state (see Figure 4), as the gripper means 110 are moved from the first side f₁ to the second side f₂ of the apparatus 100, the control means 150 receive the detection signal s₀ representative of a first predetermined voltage range that determines the absence of the section P. Particularly, the light beam emitted by the detection means 120 along a section of length l₁, does not impinge on the section P.

In a second state (see Figure 5), as the gripper means 110 are moved from the first side f₁ to the second side f₂ of the apparatus 100, the control means 150 receive the detection signal s₁ representative of a second predetermined voltage range that determines the presence of the section P and hence the detection of the head end p₁ of the section P. Particularly, the light beam emitted by the detection means 120 along a section of length l₂, i.e. equal to the length of the section P, impinges on the section P.

In a third state, as the gripper means 110 are moved from the first side f₁ to the second side f₂ of the apparatus 100, the control means 150 receive the detection signal s₀ representative of the first predetermined voltage range that determines again the absence of the section P and hence the detection of the terminal end p₂ of the section P. In this case, the light beam emitted by the detection means 120 does not impinge on the section P.

As the control means 150 receive the detection signal s₀ upon reception of the signal s₁, these control means 150 transmit the deactivation control signal s_{OFF} to the first drive means 111a. Thus, the gripper means 110 are slowed down along a predetermined section l₃ in the direction Y-Y (see Figure 6).

Subsequently, as shown in the embodiment of Figure 6, the gripper means 110 are stopped at the terminal end p₂ of the section P.

In a fourth state, the control means 150 transmit an activation control signal s_{ON} to the second drive means 111b. The clamping vice 112 is thus moved in the vertical direction Z-Z along a section of predetermined length l₄.

In a fifth state, the control means 150 transmit a deactivation control signal s_{OFF} to the second drive means 111b. Here, the clamping vice 112 is stopped substantially at the terminal end p₂ of the section P.

In a sixth state (see Figure 7), the control means 150 transmit an activation control signal s_{ON} to the first drive means 111a. The clamping vice 112 is thus moved towards the terminal end p₂ of the section P along a section l₅ in the direction Y-Y, to the first side f₁ of the apparatus 100.

At this point, the clamping vice 112 moves to the terminal end p₂ of the section P until the retainer means 115 abut against the terminal end p₂ of the section P. As the retainer means 115 abut against the terminal end p₂ of the section P, they generate and transmit an enable signal sᵣ to the control means 150.

Upon reception of the enable signal sᵣ, the control means 150 transmit a deactivation control signal s_{OFF} to the first drive means 111a to stop the motion of the gripper means 110 in the direction Y-Y. At the same time, the control means 150 transmit an activation signal s_{ON} to the actuator means 113 to move the jaws 112a, 112b towards each other and hold the section P in the clamping vice 112.

Once the section P has been grasped in the clamping vice 112, in a seventh state (see Figure 8), the control means 150 transmit an activation control signal s_{ON} to the first drive means 111a to move the gripper means 110, and hence the section P, in the direction Y-Y from the second side f₂ to the first side f₁ of the apparatus 100 along a section of length l₆.

Then, the control means 150 transmit a deactivation control signal, s_{OFF}, e.g. through additional retainer means in the section working unit 300, to the first drive means 111a to stop the motion of the gripper means 110 in the direction Y-Y. At the same time, the control means 150 transmit a deactivation signal s_{OFF} to the actuator means 113 to move the jaws 112a, 112b away from each other, to disengage and release the section P into the section working unit 300.

As clearly shown in the above description, the apparatus for handling sections and the method of the present invention fulfill the needs and obviate the prior art drawbacks as set out in the introduction of this disclosure.

Those skilled in the art will obviously appreciate that a number of changes and variants may be made to the apparatus for handling sections and to the method of the invention as described hereinbefore to meet specific needs, without departure from the scope of the invention, as defined in the following claims.

## Claims

1. A method for handling sections (P) to be worked through an apparatus (100) for handling sections (P) to be worked, said apparatus (100) having:
- support means (107) for supporting a section (P) to be worked extending in a longitudinal direction,
- a slide guide (105) extending in a sliding direction (Y-Y) substantially parallel to the longitudinal extension of said section (P),
- gripper means (110) mounted to said slide guide (105) and adapted to grasp said section (P),
- detection means (120) fixed to said gripper means (110),
said method including the steps of:
a) activating said detection means (120),
b) moving said gripper means (110) along said slide guide (105),
c) checking for the presence of said section (P) by said detection means (120), said step c) including the steps of:
c₁) locating a first end (p₁) of said section (P),
c₂) locating a second end (p₂) of said section (P),
d) stopping the motion of said gripper means (110) when said second end (p₂) of said section (P) has been located,
e) grasping said section (P) at said second end (p₂) by said gripper means (110).

2. A method for handling sections (P) as claimed in claim 1, wherein the step b) of moving said gripper means (110) includes the steps of:
b₁) moving said gripper means (110) by first drive means (111a) movably associated with said slide guide (105),
b₂) providing a control signal to said first drive means (111a) to control the motion of said gripper means (110) along said slide guide (105).

3. A method for handling sections (P) as claimed in claim 2, wherein the step b₁) of moving said gripper means (110) includes the step of:
b₁₋₁) moving said gripper means (110) at constant speed (sᵥ) along said slide guide (105).

4. A method for handling sections (P) as claimed in any claim from 1 to 3, wherein the step c) of checking for the presence of said section (P) includes the step of repeating the steps b) and c) if the presence of said section (P) has not been detected.

5. A method for handling sections (P) as claimed in any claim from 1 to 4, wherein the step c) of checking for the presence of said section (P) includes the steps of:
c₃) calculating a time interval (sₜ) indicative of the time interval elapsed between the step c₁) and the step c₂) by a counter (160) associated with said detection means (120),
c₄) processing the constant speed value (sᵥ) and the time interval value (sₜ) by measuring means (170) in signal communication with the counter (160),
c₅) calculating a measurement (s₁) indicative of the length of the section (P).

6. A method for handling sections (P) as claimed in any claim from 1 to 5, wherein the step d) of stopping the motion of said gripper means (110) includes the steps of:
d₁) providing a deactivation control signal (s_{OFF}) to said first drive means (111a) to slow down said gripper means (110) in the sliding direction (Y-Y) at said second end (p₂) of said section (P),
d₂) providing an activation control signal (s_{ON}) to said second drive means (111b) to move said gripper means (110) to said support means (107) that support the section (P) in a vertical direction (Z-Z) substantially perpendicular to said sliding direction (Y-Y),
d₃) providing a deactivation control signal (s_{OFF}) to said second drive means (111b) to stop the motion of said gripper means (110) in said vertical direction (Z-Z) at said end (p₂) of said section (P),
d₄) providing an activation control signal (s_{ON}) to said first drive means (111a) to move said gripper means (110) to said section (P) in said sliding direction (Y-Y),
d₅) providing a deactivation control signal (s_{OFF}) to said first drive means (111a) upon reception of a retaining signal (sᵣ) indicative of the determination of the end (p₂) of said section (P), to stop the motion of said gripper means (110) in said sliding direction (Y-Y).

7. A method for handling sections (P) as claimed in claim 6, wherein the step d₁) of providing a deactivation control signal (s_{OFF}) includes the steps of:
d₁₋₁) providing said deactivation signal (s_{OFF}) to said first drive means (111a) upon reception of said second signal (so) indicative of the absence of the section (P),
d₁₋₂) decreasing the speed of said first drive means (111a) according to a predetermined deceleration rule,
d₁₋₃) decreasing the speed of said gripper means (110) along a section (l₃) of predetermined length in said sliding direction (Y-Y).

8. An apparatus (100) for carrying out the method for handling sections (P) to be worked according to claim 1, said apparatus (100) comprising:
- support means (107) for supporting a workpiece section (P) extending in a longitudinal direction,
- a slide guide (105) extending in a sliding direction (Y-Y) substantially parallel to the longitudinal extension of said section (P),
- gripper means (110) movably mounted to said slide guide (105) and adapted to grasp said section (P) at its second end (p₂), said gripper means (110) being mutually movable relative to said support means (107),
- detection means (120) fixed to said gripper means (110) and movable integrally with said gripper means (110) to slide along said slide guide (105) relative to the support means (107) that support the section (P), said detection means (120) being adapted to generate a first detection signal (s₁) indicative of the presence of said section (P) and a second detection signal (so) indicative of the absence of said section (P), said detection means (120) being able to locate first and second ends (p₁, p₂) of said section (P),
- first drive means (111a) for moving said gripper means (110) along said slide guide (105),
- control means (150) in signal communication with said first drive means (111a) and adapted to provide a control signal to said first drive means (111a) to control the motion of said gripper means (110) along said slide guide (105) and to stop them when the second end (p₂) of said section (P) has been located,
wherein said control means (150) are in signal communication with said detection means (120) and are adapted to provide a deactivation control signal (s_{OFF}) to said first drive means (111a) to stop the motion of said gripper means (110) upon reception of said second signal (so) indicative of the absence of the section (P).

9. An apparatus (100) as claimed in claim 8, wherein said control means (150) comprise:
- control means (140) in signal communication with said first drive means (111a) and adapted to generate a controlling signal (sᵥ) to control the speed of said first drive means (111a).
- a counter (160) in signal communication with said detection means (120) and adapted to receive said first signal (s₁) and said second signal (so), said counter (160) being triggered upon detection of said first signal (s₁) and stopped upon detection of said second signal (so) to generate a time signal (sₜ) indicative of the time interval elapsed from the reception of said first signal (s₁) to the reception of said second signal (so),
- measuring means (170) in signal communication with said control means (140) and with said counter (160), said measuring means (170) being adapted to process said speed controlling signal (sᵥ) and said time signal (sₜ) to generate a measurement signal (s₁) indicative of the length of said section (P).

10. An apparatus (100) as claimed in claim 9, wherein said control means (140) are adapted to generate said speed controlling signal (sᵥ) to set the speed of said first drive means (111a) to a predetermined constant speed value.

11. An apparatus (100) as claimed in any claim from 8 to 10, comprising second drive means (111b) for moving said gripper means (110) from and to said support means (107) that support the section (P).

12. An apparatus (1) as claimed in any claim from 8 to 11, wherein said gripper means (110) include a clamping vice (112) comprising:
- two opposite jaws (112a, 112b) that are designed to be moved towards each other in a clamping direction,
- actuator means (113) operating on said jaws (112a, 112b) to cause said jaws (112a, 112b) to move in said clamping direction.

13. An apparatus (1) as claimed in claim 12, wherein said gripper means (110) include retainer means (115) associated with said jaws (112a, 112b) and adapted to locate the end of said section (P).

14. An apparatus (100) as claimed in claim 13, wherein said retainer means (115) are in signal communication with said control means (150) and are adapted to generate a retaining signal (sᵣ) indicative of the determination of the position of the end of said section (P), said control means (150) being adapted to provide said deactivation control signal (s_{OFF}) to said first drive means (111a) to stop the motion of said gripper means (110) upon reception of said retaining signal (sᵥ).

15. An apparatus (100) for handling sections (P) as claimed in any claim 9 to 14, wherein said control means (150) are in signal communication with said measuring means (170), said control means (150) being adapted to provide said deactivation signal (s_{OFF}) to said first drive means (111a) upon reception of said time signal (sₜ).

## Patentansprüche

1. Verfahren zum Handhaben von zu bearbeitenden Abschnitten (P) durch eine Vorrichtung (100) für die Handhabung von zu bearbeitenden Abschnitten (P), wobei die Vorrichtung (100) besitzt:
- Tragmittel (107), um einen zu bearbeitenden Abschnitt (P), der sich in einer Längsrichtung erstreckt, zu tragen,
- eine Gleitführung (105), die sich in einer Gleitrichtung (Y-Y) im Wesentlichen parallel zu der Längserstreckung des Abschnitts (P) erstreckt,
- Greifermittel (110), die an der Gleitführung (105) angebracht sind und dazu ausgelegt sind, den Abschnitt (P) zu ergreifen, und
- Detektionsmittel (120), die an den Greifermitteln (110) befestigt sind,
wobei das Verfahren die folgenden Schritte umfasst:
a) Aktivieren der Detektionsmittel (120),
b) Bewegen der Greifermittel (110) längs der Gleitführung (105),
c) Prüfen durch die Detektionsmittel (120), ob der Abschnitt (P) vorhanden ist, wobei der Schritt c) die folgenden Schritte umfasst:
c₁) Lokalisieren eines ersten Endes (p₁) des Abschnitts (P),
c₂) Lokalisieren eines zweiten Endes (p₂) des Abschnitts (T),
d) Anhalten der Bewegung der Greifermittel (110), wenn das zweite Ende (p₂) des Abschnitts (P) lokalisiert worden ist,
e) Ergreifen des Abschnitts (P) an dem zweiten Ende (p₂) durch die Greifermittel (110).

2. Verfahren zum Handhaben von Abschnitten (P) nach Anspruch 1, wobei der Schritt b) des Bewegens der Greifermittel (110) die folgenden Schritte umfasst:
b₁) Bewegen der Greifermittel (110) durch erste Antriebsmittel (111a), die der Gleitführung (105) beweglich zugeordnet sind,
b₂) Bereitstellen eines Steuersignals für die ersten Antriebsmittel (111a), um die Bewegung der Greifermittel (110) längs der Gleitführung (105) zu steuern.

3. Verfahren zum Handhaben von Abschnitten (P) nach Anspruch 2, wobei der Schritt b₁) des Bewegens der Greifermittel (110) den folgenden Schritt umfasst:
b₁₋₁) Bewegen der Greifermittel (110) mit konstanter Geschwindigkeit (sᵥ) längs der Gleitführung (105).

4. Verfahren zum Handhaben von Abschnitten (P) nach einem der Ansprüche 1 bis 3, wobei der Schritt c) des Prüfens, ob der Abschnitt (P) vorhanden ist, den Schritt des Wiederholens der Schritte b) und c) umfasst, falls das Vorhandensein des Abschnitts (P) nicht detektiert worden ist.

5. Verfahren zum Handhaben von Abschnitten (P) nach einem der Ansprüche 1 bis 4, wobei der Schritt c) des Prüfens, ob der Abschnitt (P) vorhanden ist, die folgenden Schritte umfasst:
c₃) Berechnen eines Zeitintervalls (sₜ), das das Zeitintervall angibt, das zwischen dem Schritt c₁) und dem Schritt c₂) verstrichen ist, durch einen Zähler (160), der den Detektionsmitteln (120) zugeordnet ist,
c₄) Verarbeiten des Wertes der konstanten Geschwindigkeit (sᵥ) und des Wertes (sₜ) des Zeitintervalls durch Messmittel (170), die mit dem Zähler (160) in einer Signalkommunikation stehen,
c₅) Berechnen einer Messung (s₁), die die Länge des Abschnitts P angibt.

6. Verfahren zum Handhaben von Abschnitten (P) nach einem der Ansprüche 1 bis 5, wobei der Schritt d) des Anhaltens der Bewegung der Greifermittel (110) die folgenden Schritte umfasst:
d₁) Bereitstellen eines Deaktivierungssteuersignals (s_{OFF}) für die ersten Antriebsmittel (111a), um die Greifermittel (110) in der Gleitrichtung (Y-Y) an dem zweiten Ende (p₂) des Abschnitts (P) zu verlangsamen,
d₂) Bereitstellen eines Aktivierungssteuersignals (s_{ON}) für die zweiten Antriebsmittel (111b), um die Greifermittel (110) zu den Tragmitteln (107), die den Abschnitt (D) tragen, in einer vertikalen Richtung (Z-Z), die zu der Gleitrichtung (Y-Y) im Wesentlichen senkrecht ist, zu bewegen,
d₃) Bereitstellen eines Deaktivierungssteuersignals (s_{OFF}) für die zweiten Antriebsmittel (111b), um die Bewegung der Greifermittel (110) in der vertikalen Richtung (Z-Z) an dem Ende (P₂) des Abschnitts (P) anzuhalten,
d₄) Bereitstellen eines Aktivierungssteuersignals (s_{ON}) für die ersten Antriebsmittel (111a), um die Greifermittel (110) in der Gleitrichtung (Y-Y) zu dem Abschnitt (P) zu bewegen.
d₅) Bereitstellen eines Deaktivierungssteuersignals (s_{OFF}) für die ersten Antriebsmittel (111a) bei Empfang eines Haltesignals (sᵣ), das die Bestimmung des Endes (p₂) des Abschnitts (P) angibt, um die Bewegung der Greifermittel (110) in der Gleitrichtung (Y-Y) anzuhalten.

7. Verfahren zum Handhaben von Abschnitten (P) nach Anspruch 6, wobei der Schritt d₁) des Bereitstellens eines Deaktivierungssteuersignals (s_{OFF}) die folgenden Schritte umfasst:
d₁₋₁) Bereitstellen des Deaktivierungssignals (s_{OFF}) für die ersten Antriebsmittel (111a) bei Empfang des zweiten Signals (s₀), das das Fehlen des Abschnitts (P) angibt,
d₁₋₂) Senken der Geschwindigkeit der ersten Antriebsmittel (111a) entsprechend einem vorgegebenen Verzögerungswert,
d₁₋₃) Senken der Geschwindigkeit der Greifermittel (110) längs eines Abschnitts (l₃) mit vorgegebener Länge in der Gleitrichtung (Y-Y).

8. Vorrichtung (100) zum Ausführen des Verfahrens zum Handhaben von zu bearbeitenden Abschnitten (P) nach Anspruch 1, wobei die Vorrichtung (100) umfasst:
- Tragmittel (107), um einen Werkstückabschnitt (P), der sich in einer Längsrichtung erstreckt, zu tragen,
- eine Gleitführung (105), die sich in einer Gleitrichtung (Y-Y) im Wesentlichen parallel zu der Längserstreckung des Abschnitts (P) erstreckt,
- Greifermittel (110), die an der Gleitführung (105) beweglich angebracht sind und dazu ausgelegt sind, den Abschnitt (P) an seinem zweiten Ende (p₂) zu ergreifen, wobei die Greifermittel (110) relativ zu den Tragmitteln (107) beweglich sind,
- Detektionsmittel (120), die an den Greifermitteln (110) befestigt sind und einteilig mit den Greifermitteln (110) beweglich sind, um längs der Gleitführung (105) relativ zu den Tragmitteln (107), die den Abschnitt (P) tragen, zu gleiten, wobei die Detektionsmittel (120) dazu ausgelegt sind, ein erstes Detektionssignal (s₁), das das Vorhandensein des Abschnitts (P) angibt, und ein zweites Detektionssignal (s₀), das das Fehlen des Abschnitts (P) angibt, zu erzeugen, wobei die Detektionsmittel (120) ein erstes und ein zweites Ende (p₁, p₂) des Abschnitts (P) lokalisieren können,
- erste Antriebsmittel (111a), um die Greifermittel (110) längs der Gleitführung (105) zu bewegen,
- Steuermittel (150), die mit den ersten Antriebsmitteln (111a) in einer Signalkommunikation stehen und dazu ausgelegt sind, ein Steuersignal für die ersten Antriebsmittel (111a) bereitzustellen, um die Bewegung der Greifermittel (110) längs der Gleitführung (105) zu steuern und sie anzuhalten, wenn das zweite Ende (p₂) des Abschnitts (P) lokalisiert worden ist,
wobei die Steuermittel (150) mit den Detektionsmitteln (120) in einer Signalkommunikation stehen und dazu ausgelegt sind, ein Deaktivierungssteuersignal (s_{OFF}) für die ersten Antriebsmittel (111a) bereitzustellen, um die Bewegung der Greifermittel (110) anzuhalten, wenn sie das zweite Signal (s₀), das das Fehlen des Abschnitts (P) angibt,empfangen.

9. Vorrichtung (100) nach Anspruch 8, wobei die Steuermittel (150) umfassen:
- Steuermittel (140), die mit den ersten Antriebsmitteln (111a) in einer Signalkommunikation stehen und dazu ausgelegt sind, ein Steuersignal (sᵥ) zu erzeugen, um die Geschwindigkeit der ersten Antriebsmittel (111a) zu steuern,
- einen Zähler (160), der mit den Detektionsmitteln (120) in einer Signalkommunikation steht und dazu ausgelegt ist, das erste Signal (s₁) und das zweite Signal (s₀) zu empfangen, wobei der Zähler (160) bei Detektion des ersten Signals (s₁) ausgelöst wird und bei Detektion des zweiten Signals (s₀) angehalten wird, um ein Zeitsignal (sₜ) zu erzeugen, das das Zeitintervall angibt, das zwischen dem Empfang des ersten Signals (s₁) und dem Empfang des zweiten Signals (s₀) verstrichen ist,
- Messmittel (170), die mit den Steuermitteln (140) und mit dem Zähler (160) in einer Signalkommunikation stehen, wobei die Messmittel (170) dazu ausgelegt sind, das Geschwindigkeitssteuersignal (sᵥ) und das Zeitsignal (sₜ) zu verarbeiten, um ein Messsignal (s₁) zu erzeugen, das die Länge des Abschnitts (P) angibt.

10. Vorrichtung (100) nach Anspruch 9, wobei die Steuermittel (140) dazu ausgelegt sind, das Geschwindigkeitssteuersignal (sᵥ) zu erzeugen, um die Geschwindigkeit der ersten Antriebsmittel (111a) auf einen vorgegebenen konstanten Geschwindigkeitswert zu setzen.

11. Vorrichtung (100) nach einem der Ansprüche 8 bis 10, die zweite Antriebsmittel (111b) umfasst, um die Greifermittel (110) von und zu den Tragmitteln (107), die den Abschnitt (P) tragen, zu bewegen.

12. Vorrichtung (1) nach einem der Ansprüche 8 bis 11, wobei die Greifermittel (110) eine Klemmvorrichtung (112) umfassen, die ihrerseits umfasst:
- zwei gegenüberliegende Klauen (112a, 112b), die entworfen sind, um in einer Klemmrichtung aufeinander zu bewegt zu werden,
- Aktuatormittel (113), die auf die Klauen (112a, 112b) einwirken, um die Klauen (112a, 112b) zu veranlassen, sich in der Klemmrichtung zu bewegen.

13. Vorrichtung (1) nach Anspruch 12, wobei die Greifmittel (110) Haltemittel (115) enthalten, die den Klauen (112a, 112b) zugeordnet sind und dazu ausgelegt sind, das Ende des Abschnitts (T) zu lokalisieren.

14. Vorrichtung (100) nach Anspruch 13, wobei die Haltemittel (115) mit den Steuermitteln (150) in einer Signalkommunikation stehen und dazu ausgelegt sind, ein Haltesignal (sᵣ) zu erzeugen, das die Bestimmung der Position des Endes des Abschnitts (P) angibt, wobei die Steuermittel (150) dazu ausgelegt sind, das Deaktivierungssteuersignal (s_{OFF}) für die ersten Antriebsmittel (111a) bereitzustellen, um die Bewegung der Greifermittel (110) anzuhalten, wenn sie das Haltesignal (sᵥ) empfangen.

15. Vorrichtung (100) zum Handhaben von Abschnitten (P) nach einem der Ansprüche 9 bis 14, wobei die Steuermittel (150) mit den Messmitteln (170) in einer Signalkommunikation stehen, wobei die Steuermittel (150) dazu ausgelegt sind, das Deaktivierungssignal (s_{OFF}) für die ersten Antriebsmittel (111a) bereitzustellen, wenn sie das Zeitsignal (sₜ) empfangen.

## Revendications

1. Procédé destiné à manipuler des sections (P) à traiter à l'aide d'un appareil (100) pour manipuler des sections (P) à traiter, ledit appareil (100) comprenant :
des moyens de support (107) pour supporter une section (P) à traiter, s'étendant dans une direction longitudinale,
un guide de coulissement (105) s'étendant dans une direction de coulissement (Y-Y) sensiblement parallèle à l'extension longitudinale de ladite section (P),
des moyens de prise (110) montés sur ledit guide de coulissement (105) et adaptés pour saisir ladite section (P),
des moyens de détection (120) fixés sur lesdits moyens de prise (110),
ledit procédé comprenant les étapes consistant à :
a) activer lesdits moyens de détection (120),
b) déplacer lesdits moyens de prise (110) le long dudit guide de coulissement (105),
c) vérifier la présence de ladite section (P) grâce auxdits moyens de détection (120), ladite étape c) comprenant les étapes consistant à :
c₁) localiser une première extrémité (p₁) de ladite section (P),
c₂) localiser une deuxième extrémité (p₂) de ladite section (P),
d) arrêter le mouvement desdits moyens de prise (110) lorsque ladite deuxième extrémité (p₂) de ladite section (P) a été localisée,
e) saisir ladite section (P) au niveau de ladite deuxième extrémité (p₂) avec lesdits moyens de prise (110).

2. Procédé destiné à manipuler des sections (P) selon la revendication 1, dans lequel l'étape b) consistant à déplacer lesdits moyens de prise (110) comprend les étapes consistant à :
b₁) déplacer lesdits moyens de prise (110) à l'aide des premiers moyens d'entraînement (111a) associés de manière mobile avec ledit guide de coulissement (105),
b₂) fournir un signal de commande auxdits premiers moyens d'entraînement (111a) afin de commander le mouvement desdits moyens de prise (110) le long dudit guide de coulissement (105).

3. Procédé destiné à manipuler des sections (P) selon la revendication 2, dans lequel l'étape b₁) consistant à déplacer lesdits moyens de prise (110) comprend l'étape consistant à :
b₁₋₁) déplacer lesdits moyens de prise (110) à une vitesse constante (sᵥ) le long dudit guide de coulissement (105).

4. Procédé destiné à manipuler des sections (P) selon l'une quelconque des revendications 1 à 3, dans lequel l'étape c) consistant à vérifier la présence de ladite section (P) comprend l'étape consistant à répéter les étapes b) et c) si la présence de ladite section (P) n'a pas été détectée.

5. Procédé destiné à manipuler des sections (P) selon l'une quelconque des revendications 1 à 4, dans lequel l'étape c) consistant à vérifier la présence de ladite section (P) comprend les étapes consistant à :
c₃) calculer un intervalle de temps (sₜ) indicatif de l'intervalle de temps écoulé entre l'étape c₁) et l'étape c₂) à l'aide d'un compteur (160) associé auxdits moyens de détection (120),
c₄) traiter la valeur de vitesse constante (sᵥ) et la valeur d'intervalle de temps (sₜ) par des moyens de mesure (170) en communication de signal avec le compteur (160),
c₅) calculer une mesure (s₁) indicative de la longueur de la section (P).

6. Procédé destiné à manipuler des sections (P) selon l'une quelconque des revendications 1 à 5, dans lequel l'étape d) consistant à arrêter le mouvement desdits moyens de prise (110) comprend les étapes consistant à :
d₁) fournir un signal de commande de désactivation (s_{OFF}) auxdits premiers moyens d'entraînement (111a) afin de ralentir lesdits moyens de prise (110) dans la direction de coulissement (Y-Y) à ladite deuxième extrémité (p₂) de ladite section (P),
d₂) fournir un signal de commande d'activation (s_{ON}) auxdits deuxièmes moyens d'entraînement (111b) afin de déplacer lesdits moyens de prise (110) vers lesdits moyens de support (107) qui supportent la section (P) dans une direction verticale (Z-Z) sensiblement perpendiculaire à ladite direction de coulissement (Y-Y),
d₃) fournir un signal de commande de désactivation (s_{OFF}) auxdits deuxièmes moyens d'entraînement (111b) afin d'arrêter le mouvement desdits moyens de prise (110) dans ladite direction verticale (Z-Z) à ladite extrémité (p₂) de ladite section (P),
d₄) fournir un signal de commande d'activation (s_{ON}) auxdits premiers moyens d'entraînement (111a) afin de déplacer lesdits moyens de prise (110) vers ladite section (P) dans ladite direction de coulissement (Y-Y),
d₅) fournir un signal de commande de désactivation (s_{OFF}) auxdits premiers moyens d'entraînement (111a) après la réception d'un signal de retenue (sᵣ) indicatif de la détermination de l'extrémité (p₂) de ladite section (P), afin d'arrêter le mouvement desdits moyens de prise (110) dans ladite direction de coulissement (Y-Y).

7. Procédé destiné à manipuler des sections (P) selon la revendication 6, dans lequel l'étape d₁) consistant à fournir un signal de commande de désactivation (s_{OFF}) comprend les étapes consistant à :
d₁₋₁) fournir ledit signal de désactivation (s_{OFF}) auxdits premiers moyens d'entraînement (111a) après la réception dudit deuxième signal (s₀) indicatif de l'absence de la section (P),
d₁₋₂) diminuer la vitesse desdits premiers moyens d'entraînement (111a) selon une règle de ralentissement prédéterminée,
d₁₋₃) diminuer la vitesse desdits moyens de prise (110) le long d'une section (l₃) de longueur prédéterminée dans ladite direction de coulissement (Y-Y).

8. Appareil (100) destiné à réaliser le procédé permettant de manipuler des sections (P) à traiter selon la revendication 1, ledit appareil (100) comprenant :
des moyens de support (107) pour supporter une section de pièce (P) s'étendant dans une direction longitudinale,
un guide de coulissement (105) s'étendant dans une direction de coulissement (Y-Y) sensiblement parallèle à l'extension longitudinale de ladite section (P),
des moyens de prise (110) montés de manière mobile sur ledit guide de coulissement (105) et adaptés pour saisir ladite section (P) au niveau de sa deuxième extrémité (p₂), lesdits moyens de prise (110) étant mutuellement mobiles par rapport auxdits moyens de support (107),
des moyens de détection (120) fixés sur lesdits moyens de prise (110) et mobiles de manière solidaire avec lesdits moyens de prise (110) pour coulisser le long dudit guide de coulissement (105) par rapport aux moyens de support (107) qui supportent la section (P), lesdits moyens de détection (120) étant adaptés pour générer un premier signal de détection (s₁) indicatif de la présence de ladite section (P) et un deuxième signal de détection (s₀) indicatif de l'absence de ladite section (P), lesdits moyens de détection (120) pouvant localiser les première et deuxième extrémités (p₁, p₂) de ladite section (P),
des premiers moyens d'entraînement (111a) pour déplacer lesdits moyens de prise (110) le long dudit guide de coulissement (105),
des moyens de commande (150) en communication de signal avec lesdits premiers moyens d'entraînement (111a) et adaptés pour fournir un signal de commande auxdits premiers moyens d'entraînement (111a) afin de commander le mouvement desdits moyens de prise (110) le long dudit guide de coulissement (105) et afin de les arrêter lorsque la deuxième extrémité (p₂) de ladite section (P) a été localisée,
dans lequel lesdits moyens de commande (150) sont en communication de signal avec lesdits moyens de détection (120) et sont adaptés pour fournir un signal de commande de désactivation (s_{OFF}) auxdits premiers moyens d'entraînement (111a) afin d'arrêter le mouvement desdits moyens de prise (110) après la réception dudit deuxième signal (s₀) indicatif de l'absence de la section (P).

9. Appareil (100) selon la revendication 8, dans lequel lesdits moyens de commande (150) comprennent :
des moyens de commande (140) en communication de signal avec lesdits premiers moyens d'entraînement (111a) et adaptés pour générer un signal de commande (sᵥ) pour commander la vitesse desdits premiers moyens d'entraînement (111a),
un compteur (160) en communication de signal avec lesdits moyens de détection (120) et adapté pour recevoir ledit premier signal (s₁) et ledit deuxième signal (s₀), ledit compteur (160) étant déclenché après la détection dudit premier signal (s₁) et arrêté après la détection dudit deuxième signal (s₀) afin de générer un signal de temps (s₁) indicatif de l'intervalle de temps écoulé depuis la réception dudit premier signal (s₁) jusqu'à la réception dudit deuxième signal (so),
des moyens de mesure (170) en communication de signal avec lesdits moyens de commande (140) et avec ledit compteur (160), lesdits moyens de mesure (170) étant adaptés pour traiter le signal de commande de vitesse (sᵥ) et ledit signal de temps (sₜ) afin de générer un signal de mesure (s₁) indicatif de la longueur de ladite section (P).

10. Appareil (100) selon la revendication 9, dans lequel lesdits moyens de commande (140) sont adaptés pour générer ledit signal de commande de vitesse (sᵥ) afin de régler la vitesse desdits premiers moyens d'entraînement (111a) sur une valeur de vitesse constante prédéterminée.

11. Appareil (100) selon l'une quelconque des revendications 8 à 10, comprenant des deuxièmes moyens d'entraînement (111b) pour déplacer lesdits moyens de prise (110) de et vers lesdits moyens de support (107) qui supportent la section (P).

12. Appareil (1) selon l'une quelconque des revendications 8 à 11, dans lequel lesdits moyens de prise (110) comprennent un étau de serrage (112) comprenant :
deux mâchoires opposées (112a, 112b) conçues pour être déplacées l'une vers l'autre dans une direction de serrage,
des moyens formant actionneur (113) agissant sur lesdites mâchoires (112a, 112b) afin d'amener lesdites mâchoires (112a, 112b) à se déplacer dans ladite direction de serrage.

13. Appareil (1) selon la revendication 12, dans lequel lesdits moyens de prise (110) comprennent des moyens de retenue (115) associés auxdites mâchoires (112a, 112b) et adaptés pour localiser l'extrémité de ladite section (P).

14. Appareil (100) selon la revendication 13, dans lequel lesdits moyens de retenue (115) sont en communication de signal avec lesdits moyens de commande (150) et sont adaptés pour générer un signal de retenue (sᵣ) indicatif de la détermination de la position de l'extrémité de ladite section (P), lesdits moyens de commande (150) étant adaptés pour fournir ledit signal de commande de désactivation (s_{OFF}) auxdits premiers moyens d'entraînement (111a) afin d'arrêter le mouvement desdits moyens de prise (110) après la réception dudit signal de retenue (sᵥ).

15. Appareil (100) destiné à manipuler des sections (P) selon l'une quelconque des revendications 9 à 14, dans lequel lesdits moyens de commande (150) sont en communication de signal avec lesdits moyens de mesure (170), lesdits moyens de commande (150) étant adaptés pour fournir ledit signal de désactivation (s_{OFF}) auxdits premiers moyens d'entraînement (111a) après la réception dudit signal de temps (sₜ).
